# EUROPEAN PATENT SPECIFICATION

(11) **EP 1 916 085 B1**
(45) Date of publication and mention of the grant of the patent: **29.04.2009**
(21) Application number: 07016366.2
(22) Date of filing: 21.08.2007
(51) Int. Cl.: B29C 45/27

(54) **Material-feeding structure for a mold and casing fabrication method using the same structure**
Materialzuführstruktur für eine Form und Verfahren zur Herstellung eines Gehäuses mithilfe dieser Struktur
Structure d'introduction de matériaux pour un moule et fabrication de boîtier utilisant la même structure

(30) Priority: 26.10.2006 CN 200610137490
(43) Date of publication of application: 30.04.2008
(73) Proprietor: Coretronic Corporation, Hsinchu Hsin chu (TW)
(72) Inventor: Chueh, Chien-Tsai, Hsinchu Science Park, Hsinchu (TW)
(74) Representative: TER MEER - STEINMEISTER & PARTNER GbR

(56) References cited:
- WO-A-02/20244
- DE-U1-8202004 003 46
- JP-A- 4 166 314
- JP-A- 2005 262 494
- US-A1- 2004 212 215

## Description

### Field of the Invention

The present invention relates to a material-feeding structure for a mold and a casing fabrication method using the same structure, particularly to a material-feeding structure for a mold and a casing fabrication method using the same structure to prevent dark stains and white spots from forming on the appearance of a product.

### Description of the Related Art

In an injection molding process, solid plastic raw material is melted into a liquid state, and the molten plastic is injected into the cavity of a mold. After the mold cavity is filled with the molten plastic, the molten plastic is cooled into a solid state. Then, the mold is split, and the product is ejected from the mold. In the conventional injection molding technology, the runner via which molten plastic enters the mold cavity has great influence on the molding process and the internal stress of the product.

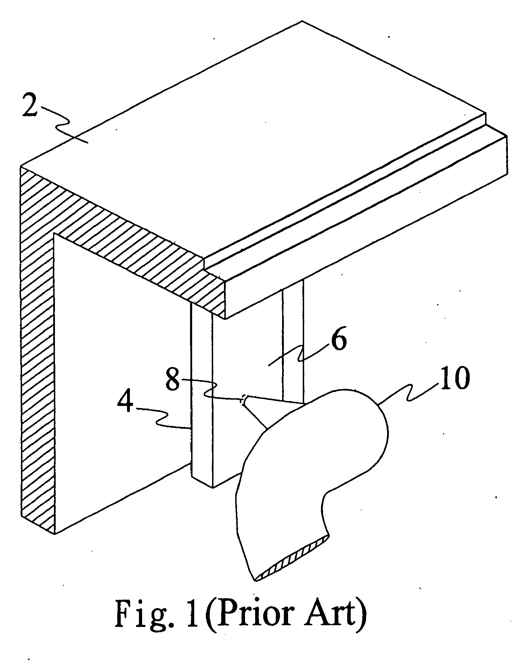

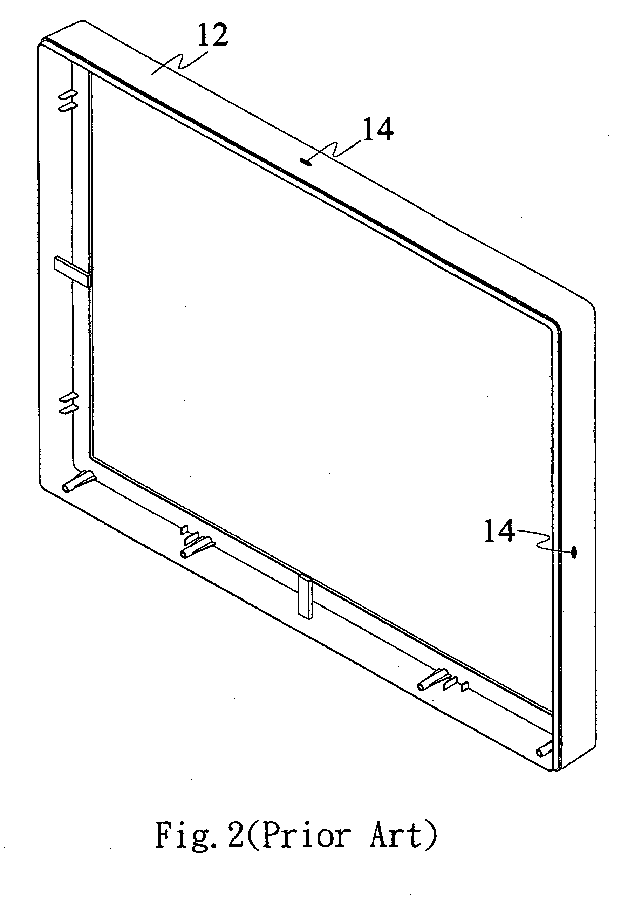

Refer to Fig.1 a diagram schematically showing a conventional material-feeding structure for an injection mold. In Fig.1, the injection mold 2 has a runner 4, which is a rectangular solid. The runner 4 has an gate 8 on a wider rectangular face 6 thereof. The gate 8 is connected with a sprue 10 for transporting the molten plastic. In an injection molding process, the molten plastic moves through the sprue 10 and enters the runner 4 via the gate 8 and then flows into the injection mold 2. However, such a method hass a great molding pressure. Therefore, the mold is apt to deform, and the dimensions of products are hard to control. As the runner 4 is colder than molten plastic, the molten plastic contacting the surface of the cavity of the runner 4 is chilled and becomes the so-called cold material, which forms dark stains and white spots on the appearance of products. As shown in Fig.2, there is a dark stain 14 forming on the corresponding surface of the produced panel casing 12. Therefore, the products requiring fine appearance further need an extra surface-processing step to remove those dark stains and white spots. Thus, the fabrication cost increases.

Accordingly, the present invention proposes a material-feeding structure for a mold and a casing fabrication method using the same structure to solve the abovementioned problems.

WO 02/20244 A1 describes an injection molding method, a mold and a die. The mold comprises a feed system through which the molding material flows from an injection unit to a mold cavity. The injection unit injects the molding material through a nozzle into conduits of the closed mold and further to the mold cavity. Only some of the injected material arrives a the mold cavity, while the rest is left in the conduits and the nozzle. The cross-section of this flow conduit in the conduit system is machined to be substantially rectangular. The outer surface of the rectangular flow conduit through which heat is conducted from the material that is in the conduit, is maximized in proportion to the capacity of the conduits, taking into account the dimensioning of the mold cavity, the filling rate of the mold cavities, and the cooling rate of the molding material that is injected into the mold cavity. The conduits may be dimensioned either experimentally or computationally using flow-determining software.

JP 2005-262494 A describes a male mold. In this male mold brought into contact with a female mold along a parting surface and forming a predetermined cavity filled with a molten material along with the female mold and having an injection boss hole communicating with the cavity to guide the molten material, a runner is provided, wherein the tapered leading end inclined with respect to the parting surface communicates with the injections boss hole to guide the molten material. Further, a runner part produced by lamination on a plane almost vertical to the runner is provided.

### SUMMARY OF THE INVENTION

One objective according to an embodiment of the present invention is to provide a material-feeding structure for a mold and a casing fabrication method using the same structure to prevent dark stains and white spots from forming on the appearance of products.

Another objective of the present invention is to provide a material-feeding structure for a mold and a casing fabrication method using the same structure to reduce molding pressure, prolong the service life of molds and make the dimensions of products is easy to control.

According to one aspect, a material-feeding structure for a mold of the present invention comprises a mold, at least one runner and a sprue. The runner is formed in the mold and has a rectangular parallelepiped shape which includes a pair of first faces and a pair of second faces. A width of the first face is smaller than a width of the second face. A gate is formed on one first face, which is narrower than the second face, and the sprue is connected to the gate of each runner. When the material-feeding structure of the present invention is used in fabricating a product, such as a casing, molten plastic material moves through the sprue and enters the runners respectively via their gates and then flows into the mold. As the gate is formed on the narrower first face, the runner has enough space to allow the reflux of the molten plastic material inside the runner. Thus, the colder molten plastic material deposits on the bottom of the runner, and the hotter molten plastic material continues to flow into the mold. After the mold is filled with the molten plastic material, the mold is cooled to solidify the molten plastic. Then, the mold is split, and the casing is ejected.

Other objectives, features and advantages of the present invention will be further understood from the further technology features disclosed by the embodiments of the present invention wherein there are shown and described preferred embodiments of this invention, simply by way of illustration of modes best suited to carry out the invention

### BRIEF DESCRIPTION OF THE DRAWINGS

- Fig.1: is a diagram schematically showing a conventional material-feeding structure for an injection mold;
- Fig.2: is a diagram schematically showing a panel casing fabricated by the conventional injection molding technology;
- Fig.3: is a stereogram view schematically showing the material-feeding structure for a mold according to an embodiment of the present invention; and
- Fig.4: is a diagram schematically showing a panel casing fabricated according to an embodiment of the present invention.

### DETAILED DESCRIPTION OF THE INVENTION

It is to be understood that other embodiments may be utilized and structural changes may be made without departing from the scope of the present invention. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items.

The present invention pertains to a material-feeding structure for a mold and a casing fabrication method using the same structure to prevent dark stains and white spots from forming on the appearance of a product. The present invention is applied to injection molding processes for fabricating various casings. Below, a mold of fabricating a panel casing is used in the exemplification of the present invention.

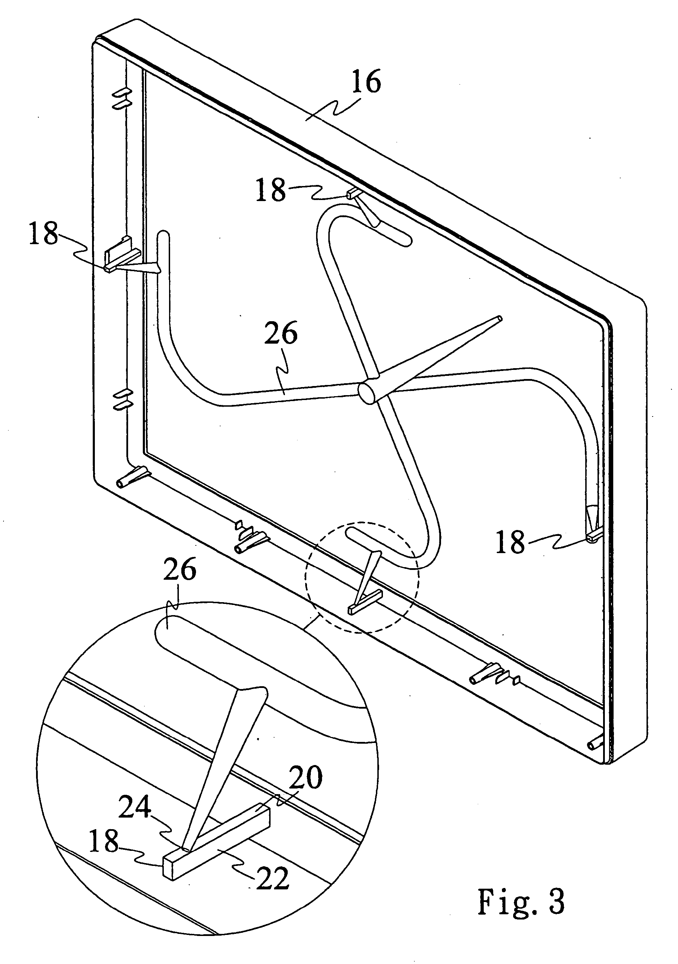

Refer to Fig.3 a stereogram view schematically showing the material-feeding structure for a mold according to an embodiment of the present invention. As shown in Fig.3, in this embodiment, the material-feeding structure for a mold comprises a mold 16 of fabricating a panel casing, four runners 18, and a sprue 26. Four runners 18 are respectively arranged on four sides of the mold 16; each runner 18 has a rectangular-parallelepiped shape which includes a pair of first faces 20 and a pair of second faces 22. The pair of the second faces 22 are connected between the pair of the first faces 20. A length of the first face 20 is equal to a length of the second face 22, and a width of the first face 20 is smaller than a width of the second face 22. An gate 24 is formed on the narrower first face 20 of each runner 18. The sprue 26 is connected to the gate 24 of each runner 18. In an injection molding process, molten plastic material moves through the sprue 26 and enters each runner 18 via the corresponding gate 24 for flowing into the mold 16. The plastic material is an Acrylonitrile-Butadiene-Styrene (ABS) resin or a mixture of ABS and PolyCarbonate (PC), for example.

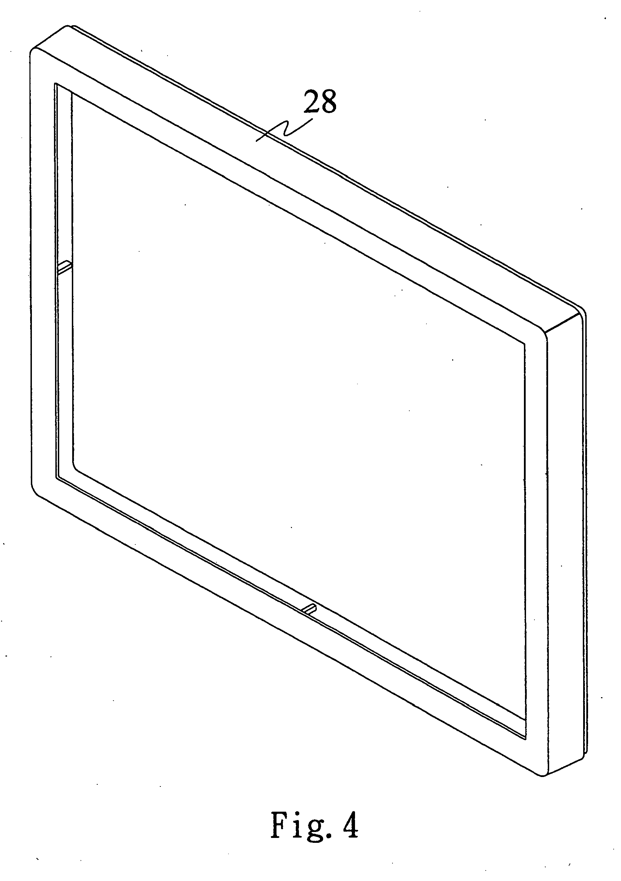

Below, a casing fabrication method using the abovementioned material-feeding structure for a mold is to be described. Firstly, a mold 16 is provided. Next, molten plastic material is injected into the sprue 26, and the molten plastic material moves through the sprue 26 and enters each runner 18 via the corresponding gate 24 on the runner 18. Because the molten plastic material enters the runner 18 via the gate 24 formed on the narrower first face 20, there is enough space to occur the reflux of the molten plastic material inside the runner 18. Thus, the colder of the molten plastic material deposits on the bottom of the runner 18, and the hotter of molten plastic material continues to flow into the mold 16. After the mold 16 is filled with the molten plastic material, the molten plastic in the mold 16 is cooled down to a temperature at which the plastic material is solidified to have enough strength, and then the plastic material is solidified into a panel casing 28. Then, the mold 16 is split, and the panel casing 28 is ejected, as shown in Fig.4.

Therefore, the present invention reduces molding pressure, prolong the service life of molds and make the dimensions of products is easy to control. Further, because the colder molten plastic deposits on the bottom of the runner, the present invention prevents dark stains and white spots from forming on the appearance of products. Thereby, the succeeding surface-processing step used in the conventional technology to remove dark stains and white spots is omitted in the present invention. Thus, the fabrication cost decreases.

## Claims

1. A material-feeding structure, comprising:
- a mold (16):
- at least one runner (18) formed in said mold (16) and having a rectangular parallelepiped shape which includes a pair of first faces (20) and a pair of second faces (22), wherein said pair of second faces (22) adjoin said pair of first faces (20), a length of each of said first faces (20) is equal to a length of each of said second faces (22), and a gate (24) is formed on one of said first faces (20); and
- a sprue (26) connected to said gate of said at least one runner (18), wherein plastic material moves through said sprue (26) and enters each said runner (18) via said gate (24) for flowing into said mold (16), **characterized in that** a width of each of said first faces (20) is smaller than a width of each of said second faces (22).

2. The material-feeding structure according to claim 1, wherein said plastic material is an Acrylonitrile-Butadiene-Styrene (ABS) resin or a mixture of ABS and PolyCarbonate (PC).

3. The material-feeding structure according to claim 1, wherein said mold (16) is used to fabricate a panel casing (28).

4. The material-feeding structure according to claim 1, further comprising a plurality of runners (18); said plurality of runners (18) are arranged in different positions of said mold (16), and said sprue (26) is connected to said gate (24) of each of said plurality of runners (18); thereby, said plastic material moves through said sprue (26) and enters said plurality of runners (18) respectively via the corresponding said gates (24) for flowing into said mold (16).

5. A casing fabrication method, **characterized by** using the material-feeding structure according to claim 1, said method comprising the following steps:
- providing said mold (16);
- injecting plastic material into said sprue (26);
- letting said plastic material move through said sprue (26) and enter said at least one runner (18) via said gate (26) formed on said runner (18) to occur a reflux of said plastic material inside said at least one runner (16), and making a colder of said plastic material deposit on a bottom of said at least one runner (18) and a hotter of said plastic material continue to flow into said mold (16); and
after said mold (16) is filled with said plastic material, cooling and solidifying said plastic material inside said mold (16) to form a casing.

6. The method according to claim 5, wherein said plastic material is an Acrylonitrile-Butadiene-Styrene (ABS) resin or a mixture of ABS and PolyCarbonate (PC).

7. The method according to claim 5, wherein said casing is a panel casing (28).

8. The method according to claim 5, further comprising a step of splitting said mold (16) and ejecting said casing after said plastic material of said mold (16) is solidified into said casing.

## Patentansprüche

1. Materialbeschickungsstruktur, die umfasst:
- eine Gießform (16);
- wenigstens einen Angießkanal (18), der in der Gießform (16) ausgebildet ist und eine rechtwinklige Parallelepiped-Form besitzt, die ein Paar erster Flächen (20) und ein Paar zweiter Flächen (22) umfasst, wobei die beiden zweiten Flächen (22) an die beiden ersten Flächen (20) angefügt sind, wobei eine Länge jeder der ersten Flächen (20) gleich einer Länge jeder der zweiten Flächen (22) ist und wobei an einer der ersten Flächen (20) ein Einlauf (24) ausgebildet ist; und
- einen Verteilerkanal (26), der mit dem Einlauf des wenigstens einen Angießkanals (18) verbunden ist, wobei sich Kunststoff durch den Verteilerkanal (26) bewegt und über den Einlauf (24) in jeden Angießkanal (18) eintritt, um in die Gießform (16) zu fließen, **dadurch gekennzeichnet, dass** eine Breite jeder der ersten Flächen (20) kleiner ist als eine Breite jeder der zweiten Flächen (22).

2. Materialbeschickungsstruktur nach Anspruch 1, wobei der Kunststoff ein Acrylonitril-Butadien-Styrol-Harz (ABS-Harz) oder ein Gemisch aus ABS und Polycarbonat (PC) ist.

3. Materialbeschickungsstruktur nach Anspruch 1, wobei die Gießform (16) verwendet wird, um ein Bedienfeldgehäuse (28) herzustellen.

4. Materialbeschickungsstruktur nach Anspruch 1, die ferner mehrere Angießkanäle (18) umfasst; wobei die mehreren Angießkanäle (18) an verschiedenen Positionen der Gießform (16) angeordnet sind und der Verteilerkanal (26) mit dem Einlauf (24) jedes der mehreren Angießkanäle (18) verbunden ist; wodurch sich der Kunststoff durch den Verteilerkanal (26) bewegt und über die entsprechenden Einläufe (24) in die mehreren Angießkanäle (18) eintritt, um in die Gießform (16) zu fließen.

5. Gehäuseherstellungsverfahren, **gekennzeichnet durch** die Verwendung der Materialbeschickungsstruktur nach Anspruch 1, wobei das Verfahren die folgenden Schritte umfasst:
- Vorsehen der Gießform (16);
- Einspritzen von Kunststoff in den Verteilerkanal (26);
- Zulassen, dass sich der Kunststoff **durch** den Verteilerkanal (26) bewegt und über den Einlauf (26), der an dem Angießkanal (18) ausgebildet ist, in den wenigstens einen Angießkanal (18) eintritt, damit ein Rückstau des Kunststoffs in dem wenigstens einen Angießkanal auftrifft, und Veranlassen, dass sich ein kälterer Anteil des Kunststoffs auf einem Boden des wenigstens einen Angießkanals (18) ablagert und dass ein heißerer Anteil des Kunststoffs weiterhin in die Gießform (16) fließt; und
nachdem die Gießform (16) mit dem Kunststoff gefüllt worden ist, Abkühlen und Verfestigen des Kunststoffs in der Gießform (16), um ein Gehäuse zu bilden.

6. Verfahren nach Anspruch 5, wobei der Kunststoff ein Acrylonitril-Butadien-Styrol-Harz (ABS-Harz) oder ein Gemisch aus ABS und Polycarbonat (PC) ist.

7. Verfahren nach Anspruch 5, wobei das Gehäuse ein Bedienfeldgehäuse (28) ist.

8. Verfahren nach Anspruch 5, das einen Schritt des Teilens der Gießform (16) und des Auswerfens des Gehäuses, nachdem sich der Kunststoff der Gießform (16) zu dem Gehäuse verfestigt hat, umfasst.

## Revendications

1. Structure d'alimentation de matériau, comprenant :
- un moule (16) ;
- au moins une goulotte (18) formée dans ledit moule (16) et ayant une forme en parallélépipède rectangulaire qui inclut une paire de premières faces (20) et une paire de secondes faces (22), telles que ladite paire de secondes faces (22) rejoignent ladite paire de premières faces (20), une longueur de chacune desdites premières faces (20) étant égale à une longueur de chacune desdites secondes faces (22) et une porte (24) est formée sur l'une desdites premières faces (20) ; et
- un jet de coulée (26) relié à ladite porte et à ladite au moins une goulotte (18), dans laquelle de la matière plastique se déplace à travers ledit jet de coulée (26) et pénètre dans chacune desdites goulottes (18) via ladite porte (24) pour s'écouler dans ledit moule (16), **caractérisée en ce qu'**une largeur de chacune desdites premières faces (20) est inférieure à une largeur de chacune desdites secondes faces (22).

2. Structure d'alimentation de matériau selon la revendication 1, dans laquelle ladite matière plastique est une résine acrylonitrile-butadiène-styrène (ABS) ou un mélange de ABS et de polycarbonate (PC).

3. Structure d'alimentation de matériau selon la revendication 1, dans laquelle ledit moule (16) est utilisé pour fabriquer un boîtier en panneaux (28).

4. Structure d'alimentation de matériau selon la revendication 1, comprenant en outre une pluralité de goulottes (18), ladite pluralité de goulottes (18) étant agencées dans différentes positions dudit moule (16), et ledit jet de coulée (26) est relié à ladite porte (24) de chacune de ladite pluralité de goulottes (18), grâce à quoi ladite matière plastique se déplace à travers ledit jet de coulée (26) et pénètre dans ladite pluralité de goulottes (18) respectivement via lesdites portes correspondantes (24) pour s'écouler dans ledit moule (16).

5. Procédé de fabrication de boîtier, **caractérisé par** l'utilisation de la structure d'alimentation de matériau selon la revendication 1, ledit procédé comprenant les étapes suivantes :
- fourniture dudit moule (16) ;
- injection de matière plastique dans ledit jet de coulée (26) ;
- on laisse ladite matière plastique se déplacer à travers ledit jet de coulée (26) et entrer dans ladite au moins une goulotte (18) via ladite porte (26) formée sur ladite goulotte (18) pour entraîner un reflux de ladite matière plastique à l'intérieur de ladite au moins une goulotte (16), en amenant la part plus froide de ladite matière plastique à se déposer sur le fond de ladite au moins une goulotte (18) et la part plus chaude de ladite matière plastique à continuer de s'écouler dans ledit moule (16) ; et
après avoir rempli ledit moule (16) avec ladite matière plastique, on laisse refroidir et solidifier ladite matière plastique à l'intérieur dudit moule (16) pour former un boîtier.

6. Procédé selon la revendication 5, dans lequel ladite matière plastique est une résine acrylonitrile-butadiène-styrène (ABS) ou un mélange de ABS et de polycarbonate (PC).

7. Procédé selon la revendication 5, dans lequel ledit boîtier est un boîtier en panneaux (28).

8. Procédé selon la revendication 5, comprenant en outre une étape consistant à scinder ledit moule (16) et éjecter ledit boîtier après que ladite matière plastique dudit moule (16) se soit solidifiée dans ledit boîtier.
